(19)

**Europäisches Patentamt**
**European Patent Office**
**Office européen des brevets**

(11)　**EP 4 391 205 A1**

(12)　# EUROPEAN PATENT APPLICATION
published in accordance with Art. 153(4) EPC

(43) Date of publication:
**26.06.2024 Bulletin 2024/26**

(21) Application number: **23844162.0**

(22) Date of filing: **26.03.2023**

(51) International Patent Classification (IPC):
$H01M\ 50/533$ (2021.01)　　$H01M\ 4/13$ (2010.01)
$H01M\ 10/052$ (2010.01)　　$H01M\ 10/0525$ (2010.01)
$H01M\ 10/054$ (2010.01)

(52) Cooperative Patent Classification (CPC):
Y02E 60/10

(86) International application number:
**PCT/CN2023/083935**

(87) International publication number:
**WO 2024/093100 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 CN 202211374725**

(71) Applicants:
• **Jiangsu Contemporary Amperex Technology Limited**
**Liyang City, Changzhou City, Jiangsu 213300 (CN)**
• **Contemporary Amperex Technology Co., Limited**
**Ningde, Fujian 352100 (CN)**

(72) Inventors:
• **WU, Kai**
**Changzhou, Jiangsu 213300 (CN)**
• **ZHANG, Zige**
**Changzhou, Jiangsu 213300 (CN)**
• **XUE, Qingrui**
**Changzhou, Jiangsu 213300 (CN)**
• **LI, Wei**
**Changzhou, Jiangsu 213300 (CN)**
• **ZHANG, Yu**
**Changzhou, Jiangsu 213300 (CN)**
• **ZHAO, Zhengyuan**
**Changzhou, Jiangsu 213300 (CN)**

(74) Representative: **Rowlands, Stuart Michael et al**
**Maucher Jenkins**
**Seventh Floor Offices**
**Artillery House**
**11-19 Artillery Row**
**London SW1P 1RT (GB)**

(54)　**ELECTRODE SHEET, ELECTRODE ASSEMBLY, BATTERY CELL, BATTERY, AND ELECTRIC DEVICE**

(57) Embodiments of this application provide an electrode plate, an electrode assembly, a battery cell, a battery, and an electric device. The electrode plate includes: a current collector, where the current collector includes an insulation layer and a conductive layer disposed on an outer surface of the insulation layer, and the conductive layer includes a body portion and a tab portion arranged along a first direction; and a conductive structure, where the conductive structure is welded to the tab portion to form a welded zone, the conductive structure extends in a direction leaving the body portion, and in a second direction, a size of an end of the welded zone near the body portion is greater than a preset threshold, where the preset threshold is inversely related to the thickness of the tab portion in a third direction, and the second direction is perpendicular to the first direction and parallel to the tab portion, where the third direction is perpendicular to the first direction and the second direction. The technical solutions of the embodiments of this application can enhance the safety of the battery.

FIG. 6

EP 4 391 205 A1

## Description

### CROSS-REFERENCE TO RELATED APPLICATIONS

This application claims priority to Chinese Patent Application No. 202211374725.8, filed on November 04, 2022 and entitled "ELECTRODE PLATE, ELECTRODE ASSEMBLY, BATTERY CELL, BATTERY, AND ELECTRIC DEVICE", the entire contents of which is incorporated herein by reference.

### TECHNICAL FIELD

This application relates to the field of battery technologies, and in particular, to an electrode plate, an electrode assembly, a battery cell, a battery, and an electric device.

### BACKGROUND

Energy conservation and emission reduction are crucial to the sustainable development of the automobile industry. In this context, electric vehicles, with their advantages in energy conservation and environmental protection, have become an important part of sustainable development of the automobile industry. For electric vehicles, battery technology is an important factor in their development.

In the development of battery technology, in addition to performance improvement, safety is another non-negligible issue. If the safety of a battery cannot be guaranteed, the battery cannot be used. Therefore, how the probability of safety issues in battery is reduced is an urgent technical problem that needs to be solved in battery technology.

### SUMMARY

Embodiments of this application provide an electrode plate, an electrode assembly, a battery cell, a battery, and an electric device, which can reduce the probability of safety issues in battery production.

According to a first aspect, an electrode plate is provided, including: a current collector, where the current collector includes an insulation layer and a conductive layer disposed on an outer surface of the insulation layer, and the conductive layer includes a body portion and a tab portion arranged along a first direction; and a conductive structure, where the conductive structure is welded to the tab portion to form a welded zone, the conductive structure extends in a direction leaving the body portion, and in a second direction, a size $L_i$ of an end of the welded zone near the body portion is greater than a preset threshold, where the preset threshold is inversely related to the thickness of the tab portion in a third direction, and the second direction is perpendicular to the first direction and parallel to the tab portion, where the third direction is perpendicular to the first direction and the second direction.

In the embodiments of this application, the electrode plate includes the current collector and the conductive structure. The current collector includes the insulation layer and the conductive layer disposed on the outer surface of the insulation layer. The conductive layer includes the body portion and the tab portion disposed along the first direction. The conductive structure is welded to the tab portion to form the welded zone, and the size $L_1$ of the end of the welded zone near the body portion in the second direction is greater than a preset threshold. The preset threshold is inversely related to the thickness of the tab portion in the third direction. In the technical solution of this application, the conductive structure with sufficient current flow capacity is welded to the tab portion, allowing the current to flow from the body portion through the tab portion (a portion near the body portion and not welded to the conductive structure) to the welded zone and then to the conductive structure, thus providing sufficient current flow capacity. However, the end of the welded zone near the body portion is the starting end where the conductive structure is connected to the tab portion. The current flow capacity at this location is also affected by the current flow capacity of the tab portion. In addition, this location is the end portion of the welded zone. If the current flow capacity is insufficient, a large amount of heat will be generated, and this end portion of the welded zone is prone to fuse, leading to repeated fusing and reconnection, which may cause sparks inside the battery. Therefore, a size $L_1$ of the end of the welded zone near the body portion in the second direction is set greater than a preset threshold, and the preset threshold is inversely related to the thickness of the tab portion in the third direction. This reduces the possibility of the end portion of the welded zone near the body portion being fused due to insufficient current flow capacity when a short circuit occurs in the battery, thereby reducing the possibility of sparks occurring in the end portion of the welded zone near the body portion and reducing the probability of safety issues in battery production.

In a possible implementation, the preset threshold is $\dfrac{L_2 * H_2}{H_1 * C} * A$, where $H_2$ indicates thickness of an adapter piece at a minimum current flow width thereof, $L_2$ indicates total width of connection surfaces between the conductive structure and the adapter piece at the minimum current flow width in the width direction of the adapter piece, $H_1$ indicates the thickness of the tab portion in the third direction, C indicates the number of conductive structures connected to one adapter piece, and A is a constant not less than 1.

The size $L_1$ of the end portion of the welded zone near the body portion in the second direction needs to be greater than the preset threshold $\dfrac{L_2 * H_2}{H_1 * C} * A$, so that the total current flow area of the end portion of the welded zone near the body portion, formed on multiple conductive structures, is greater than the current flow area of the corresponding adapter piece connected to the multiple conductive structures. This ensures that the current flow capacity of the end portion of the welded zone near the body portion, on the tab structure formed by stacking multiple conductive structures, is greater than the current flow capacity of the corresponding adapter piece, reducing the possibility of the end portion of the welded zone near the body portion being fused due to insufficient current flow capacity when a short circuit occurs in the battery, thereby reducing the probability of safety issues in battery production.

In a possible implementation, $1 \le A \le 2$. To ensure that the current flow area of the end portion of the welded zone near the body portion is greater than the current flow area of the adapter piece electrically connected to the conductive structure, constant $A \ge 1$. In addition, based on the structural design of the end cover of the battery cell, the size $L_1$ of the end portion of the welded zone should not be excessively large, so as to prevent lower plastics beneath the end cover from compressing the conductive structure. Therefore, the value of the constant A should not be excessively large, and the range of the constant A is 1 to 2.

In a possible implementation, the tab portion includes a first tab portion and a second tab portion, where in the first direction, the first tab portion is disposed between the body portion and the second tab portion, and in the second direction, a size of the first tab portion is greater than a size of the second tab portion.

The size of the first tab portion is greater than the size of the second tab portion in the second direction, that is, the first tab portion connected to the body portion has a relatively large size in the second direction. This can increase the contact area between the body portion and the tab portion, thereby increasing the connection strength, while the second tab portion has a relatively small size, which can reduce overall space occupied by the tab portion.

In a possible implementation, the welded zone includes a first welded zone and a second welded zone, where the first welded zone is located at the first tab portion, the second welded zone is located at the second tab portion, and in the second direction, a size of the first welded zone is greater than a size of the second welded zone.

The second welded zone is located at the second tab portion, which has a larger size in the second direction, so that the size $L_1$ of the end portion of the welded zone near the body portion in the second direction is greater than the preset threshold, where the welded zone is formed during the tab portion is welded to the conductive structure. In this way, the current flow area of the end portion of the welded zone near the body portion is relatively large. This reduces the possibility of the end portion of the welded zone near the body portion being fused due to insufficient current flow capacity when a short circuit occurs in the battery, thereby reducing the probability of safety issues in battery production. In addition, the welding area between the second welded zone and the second tab portion is relatively large, which can improve the connection strength between them.

In a possible implementation, a protective layer is provided on a portion of an outer surface of the tab portion. In the first direction, the protective layer is provided between the conductive structure and an active substance layer on an outer surface of the body portion, providing support to the tab portion and preventing deformation of the tab portion from affecting the current flow capacity of the electrode plate.

In a possible implementation, the protective layer is made of an insulation material to prevent the protective layer from conducting and affecting the current flow path in the electrode plate, ensuring electrical connection safety of the electrode plate.

According to a second aspect, an electrode assembly is provided, including: the electrode plate according to the foregoing first aspect or any possible implementation of the first aspect.

According to a third aspect, a battery cell is provided, including: the foregoing electrode assembly according to the second aspect or any possible embodiment of the second aspect, and a housing configured to accommodate the electrode assembly.

In a possible implementation, the housing has an opening, and the battery cell further includes an end cover, where the end cover is configured to close the opening.

According to a fourth aspect, a battery is provided, including: the foregoing battery cell according to the third aspect or any possible embodiment of the third aspect.

According to a fifth aspect, an electric device is provided, including: the battery according to the fourth aspect or any possible embodiment of the fifth aspect, where the battery is configured to supply electrical energy.

In the technical solutions of the embodiments of this application, the electrode plate includes a current collector and a conductive structure. The current collector includes an insulation layer and a conductive layer disposed on the outer surface of the insulation layer. The conductive layer includes a body portion and a tab portion disposed along a first direction. The conductive structure is welded to the tab portion, and a size $L_1$ of the end of the welded zone near the body portion in the second direction is greater than a preset threshold. The preset threshold is inversely related to the thickness of the tab portion in the third direction. In this technical solution of this application, a conductive structure with sufficient current flow capacity is connected to the tab portion by welding, allowing the current to flow from the body portion through the tab portion (a portion near the body portion and not welded to the conductive structure) to the welded zone and then to the conductive structure, thus having sufficient current flow capacity. However, the end of the welded zone near the body portion is the starting end where the conductive structure is connected to the tab portion. The current flow capacity at this location is also affected by the current flow capacity of the tab portion. In addition, this location is the end portion of the welded zone. If the current flow capacity is insufficient, a large amount of heat will be generated, and this end portion of the welded zone is prone to fuse, leading to repeated fusing and reconnection, which may cause sparks inside the battery. Therefore, a size $L_1$ of the end of the welded zone near the body portion in the second direction is set greater than a preset threshold, and the preset threshold is inversely related to the thickness of the tab portion in the third direction. This reduces the possibility of the end portion of the welded zone near the body portion being fused due to insufficient current flow capacity when a short circuit occurs in the battery, thereby reducing the possibility of sparks occurring in the end portion of the welded zone near the body portion and reducing the probability of safety issues in battery.

BRIEF DESCRIPTION OF DRAWINGS

To describe the technical solutions of the embodiments of this application more clearly, the following briefly describes the accompanying drawings required for describing the embodiments of this application. It will be apparent that the accompanying drawings described below merely show the embodiments of this application, and persons of ordinary skill in the art may still derive other drawings from the accompanying drawings without creative efforts.

FIG. 1 is a structural schematic diagram of a vehicle according to an embodiment of this application;
FIG. 2 is a structural schematic exploded view of a battery according to an embodiment of this application;
FIG. 3 is a structural schematic exploded view of a battery cell disclosed in an embodiment of this application.
FIG. 4 is a structural schematic diagram of an electrode assembly disclosed in an embodiment of this application.
FIG. 5 is a sectional view of part B in FIG. 4;
FIG. 6 is a sectional view of an electrode plate according to an embodiment of this application; and
FIG. 7 is an enlarged diagram of part A in FIG. 3.

The accompanying drawings are not drawn to scale.
Reference signs in specific embodiments are as follows:

vehicle 1;
battery 10, controller 30, motor 40;
box 11, battery cell 20, upper box body 111, lower box body 112;
housing 21, electrode assembly 22, accommodating space 23, end cover 24, electrode terminal 241, positive electrode terminal 241a, negative electrode terminal 241b, connecting member 25, first tab 221a, second tab 222a;
electrode plate 221, current collector 2211, insulation layer 2211a, conductive layer 2211b, conductive structure 2212, body portion 2213, tab portion 2214, welded zone 2215, protective layer 2216, active substance layer 2217, first tab portion 2214a, second tab portion 2214b, first welded zone 2215a, and second welded zone 2215b.

DESCRIPTION OF EMBODIMENTS

The following further describes implementations of this application in detail with reference to accompanying drawings and embodiments. The detailed descriptions of embodiments and the accompanying drawings are intended to illustrate the principle of this application, rather than to limit the scope of this application, therefore this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. Therefore, these terms shall not be construed as limitations on this application. In addition, the terms "first", "second", "third", and the like are merely intended for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. A person skilled in the art can clearly and implicitly understand that the embodiments described in this application can be combined with other embodiments.

In the embodiments of this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by a packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell may include an electrode assembly and an electrolyte. The electrode assembly includes a positive electrode plate, a negative electrode plate, and a separator. The battery cell functions mainly rely on the migration of metal ions between the positive electrode plate and the negative electrode plate. The positive electrode plate includes a positive electrode current collector and a positive electrode active substance layer. The positive electrode active substance layer is applied on a surface of the positive electrode current collector. A current collector uncoated with the positive electrode active substance layer bulges out of a current collector coated with the positive electrode active substance layer, and the current collector uncoated with the positive electrode active substance layer is used as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. A current collector uncoated with the negative electrode active substance layer protrudes from the current collector coated with the negative electrode active substance layer and the current collector uncoated with the negative electrode active substance layer is used as a negative electrode tab. The negative electrode current collector may be made of copper, and the negative electrode active substance may be carbon, silicon, or the like. To allow a large current to pass through without any fusing, multiple positive electrode tabs are provided and stacked together, and multiple negative electrode tabs are provided and stacked together. The separator may be made of polypropylene (PP), polyethylene (PE), or the like. In addition, the electrode assembly may be a wound structure or a stacked structure. This is not limited in the embodiments of this application.

Currently, from a perspective of the market development, application of electric vehicle batteries is being more extensive. Electric vehicle batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of electric vehicle batteries, market demands for electric vehicle batteries are also increasing.

For the development of battery technologies, many design factors need to be considered, for example, performance parameters such as energy density, cycle life, discharge capacity, and charge and discharge rate, as well as safety of the battery.

In the development of battery technology, various structures of electrode plates have emerged as one of the components of battery cells. For example, in order to avoid the risk of the metal conductive layer of the current collector of the electrode plate being too thick and causing excessive burrs that can pierce the separator, a composite current collector is used, that is, the current collector includes an insulation material and a metal conductive layer coated on surface of the insulation material. In this way, while ensuring overall thickness of the current collector, thickness of the metal conductive layer is also reduced, reducing the risk of burrs on the metal conductive layer piercing the separator. However, less thickness of the metal conductive layer in the composite current collector leads to insufficient current flow capacity of the tab, affecting safety performance of the battery. Therefore, how the current flow capacity of the tab is improved and thereby reducing the probability of safety issues in battery production is an urgent problem that needs to be solved.

In view of this, the embodiments of this application provide an electrode plate, where the electrode plate includes a current collector and a conductive structure. The current collector includes an insulation layer and a conductive layer disposed on the outer surface of the insulation layer. The conductive layer includes a body portion and a tab portion disposed along a first direction. The conductive structure is welded to the tab portion to form the welded zone, and a size $L_1$ of the end of the welded zone near the body portion in the second direction is greater than a preset threshold. The preset threshold is inversely related to the thickness of the tab portion in the third direction. In this technical solution of this application, a conductive structure with sufficient current flow capacity is connected to the tab portion by welding, allowing the current to flow from the body portion through the tab portion (a portion near the body portion and not welded to the conductive structure) to the welded zone and then to the conductive structure. At the same time, the size $L_1$ of the end of the welded zone near the body portion in the second direction is greater than a preset threshold to reduce the possibility of an end portion of the welded zone near the body portion being fused due to insufficient current flow capacity when a short circuit occurs in the battery, thereby reducing the possibility of sparks occurring at the end portion of the welded zone near the body portion and reducing the probability of safety issues in battery production.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, in the following embodiments, the electric vehicle is used as an example.

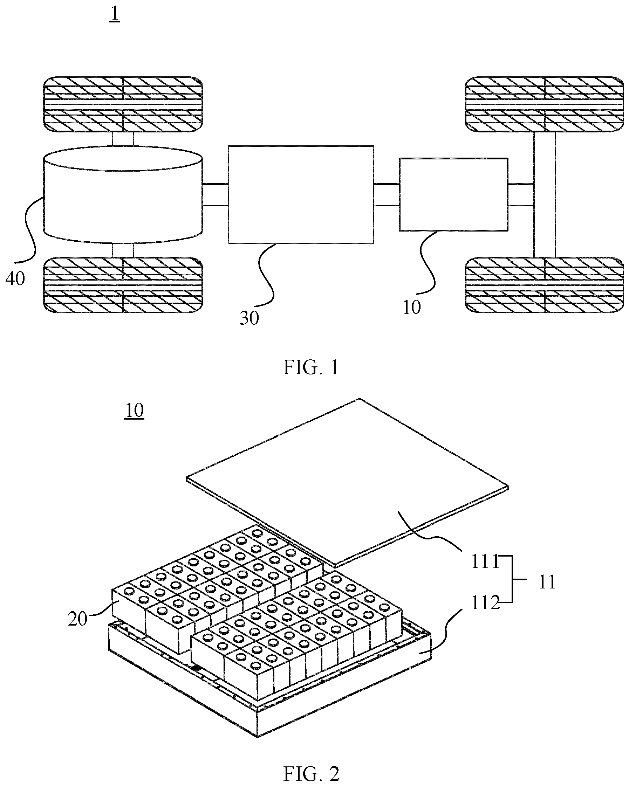

For example, FIG. 1 is a structural schematic diagram of a vehicle 1 according to an embodiment of this application. The vehicle 1 may be a fuel vehicle, a gas vehicle, or a new energy vehicle, and the new energy vehicle may be a battery electric vehicle, a hybrid electric vehicle, an extended range electric vehicle, or the like. A motor 40, a controller 30, and a battery 10 may be provided inside the vehicle 1, where the controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used not only as the operational power source for the vehicle 1, but also as a driving power source for the vehicle 1, replacing or partially replacing fossil fuel or natural gas to provide driving traction for the vehicle 1.

To meet different power usage requirements, the battery 10 may include multiple battery cells. For example, FIG. 2 is a structural schematic exploded view of a structure of a battery 10 according to an embodiment of this application. The battery 10 may include multiple battery cells 20. Based on different power demands, battery cells 20 can be set in any quantity. Multiple battery cells 20 may be connected in series, in parallel, or in series-parallel to achieve greater capacity or power. Because the quantity of battery cells 20 included in each battery 10 may be large, for ease of installation, the battery cells 20 may be arranged in groups, and each group of battery cells 20 forms a battery module. The quantity of battery cells 20 included in the battery module is not limited, and may be set according to requirements. A battery may include multiple battery modules. These battery modules may be connected in series, parallel, or series-parallel.

Optionally, the battery 10 may further include other structures. For example, the battery 10 may further include a busbar, where the busbar is configured to implement an electrical connection between multiple battery cells 20, for example, a parallel connection, a series connection, or a series-parallel connection. Specifically, the busbar may implement electrical connection among the battery cells 20 by connecting electrode terminals of the battery cells 20. Further, the busbar may be fixed to the electrode terminal of the battery cell 20 by welding. Electrical energy of the multiple battery cells 20 can be further drawn out of the box through a conductive mechanism. Optionally, the conducting mechanism may also belong to the busbar.

The battery 10 may further include a box 11 (or referred to as a cover), where the box 11 has a hollow structure inside, and the plurality of battery cells 20 are accommodated in the box 11. As shown in FIG. 2, the box 11 can include two parts, referred to as upper box body 111 and lower box body 112, where the upper box body 111 and the lower box body 112 are snap-fitted with each other. A shape of the upper box body 111 and the lower box body 112 can be determined based on the configuration of multiple battery cells 20, and at least one of the upper box body 111 and lower box body 112 has an opening. For example, the upper box body 111 and lower box body 112 of the box 11 can include only one hollow cuboid with an opening, and the other one is plate-shaped to cover the opening. For example, as shown in FIG. 2, the lower box body 112 is a hollow cuboid and has only one surface as an opening surface and the upper box body 111 is plate shaped. In such case, the upper box body 111 covers the opening of the lower box body 112 to form the box 11 with a closed cavity. The chamber may be used for accommodating the multiple battery cells 20.

Optionally, the upper box body 111 and lower box body 112 of the box 11 in the embodiments of this application can have other shapes. For example, both the upper box body 111 and lower box body 112 can be hollow cuboids, each with only one surface as the opening surface, and the openings of the upper box body 111 and lower box body 112 are arranged opposite to each other, and the upper box body 111 and lower box body 112 are snap-fitted with each other to form a box 11 with a closed cavity. The multiple battery cells 20 are connected in parallel, in series, or in series-parallel, and then placed into the box formed after the upper box body 111 and the lower box body 112 are snap-fitted.

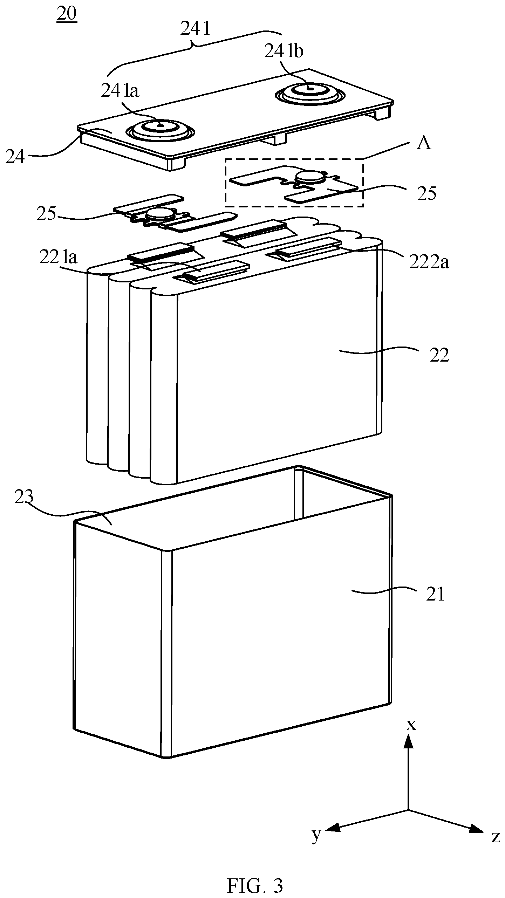

FIG. 3 is a structural schematic diagram of a battery cell 20 according to an embodiment of this application. The battery cell 20 includes one or more electrode assemblies 22, a housing 21, and an end cover 24. The housing 21 and the end cover 24 form an outer shell or battery case. Walls of the housing 21 and the end covers 24 are all referred to as walls of the battery cell 20. For a cuboid battery cell 20, the walls of the housing 21 include a bottom wall and four side walls, and the bottom wall and four side walls are connected to form an accommodating space 23 for accommodating the electrode assembly 22. The housing 21 depends on a combined shape of the one or more electrode assemblies 22. For example, the housing 21 may be a hollow cuboid, a cube, or a cylinder, and one surface of the housing 21 has an opening for placing the one or more electrode assemblies 22 into the housing 21. For example, when the housing 21 is a hollow cuboid or cube, one face of the housing 21 is an opening surface, which means that the face has no wall so that the inside and the outside of the housing 21 communicate with each other. When the housing 21 is a hollow cylinder, the end face of the housing 21 is an opening surface, which means that the end face has no wall so that the inside and the outside of the housing 21 communicate with each other. The end cover 24 covers the opening of the accommodating space 23 and is connected to the housing 21 to form a closed chamber for accommodating the electrode assembly 22. The housing 21 is filled with an electrolyte such as a liquid electrolyte.

The battery cell 20 may further include two electrode terminals 241, where the two electrode terminals 241 may be disposed on the end cover 24. The end cover 24 is typically in a flat plate shape, and the two electrode terminals 241 are fixed on a flat surface of the end covers 24. The two electrode terminals 241 are respectively a positive electrode terminal 241a and a negative electrode terminal 241b. Each electrode terminal 241 is provided with a corresponding connecting member 25, or a current collection member. The connecting member 25 is located between the end cover 24 and the electrode assembly 22 and is configured to electrically connect the electrode assembly 22 to the electrode terminal 241.

As shown in FIG. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tabs 221a of the one or more electrode assemblies 22 are connected to one electrode terminal through one connecting member 25, and the second tabs 222a of the one or more electrode assemblies 22 are connected to the other electrode terminal through the other connecting member 25. For example, the positive electrode terminal 241a is connected to the positive electrode tab via one connecting member 25, and the negative electrode terminal 241b is connected to the negative electrode tab via another connecting member 25.

In the battery cell 20, one or more electrode assemblies 22 may be provided depending on an actual need. As shown in FIG. 3, the battery cell 20 is provided with four independent electrode assemblies 22.

The battery cell in the embodiments of this application can also be a pouch cell, where one or more electrode assemblies are directly packaged in a package, forming a pouch cell. The package can be made of aluminum-plastic film.

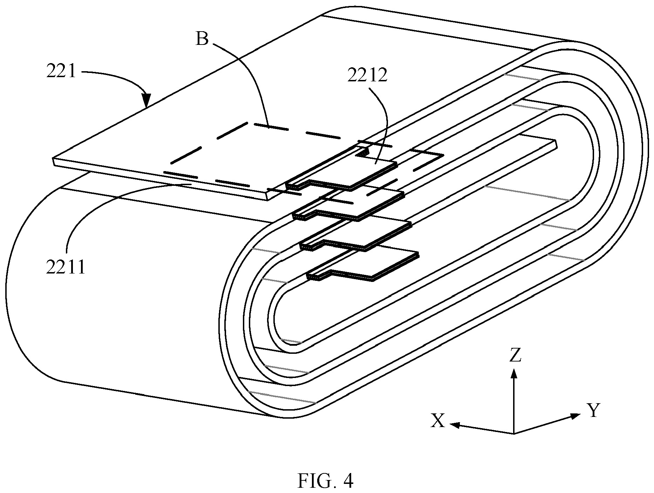

FIG. 4 shows a structural schematic diagram of an electrode assembly 22 according to an embodiment of this application. As shown in FIG. 4, the electrode assembly 22 is formed by winding electrode plates 221. The electrode plate 221 includes a current collector 2211 and a conductive structure 2212.

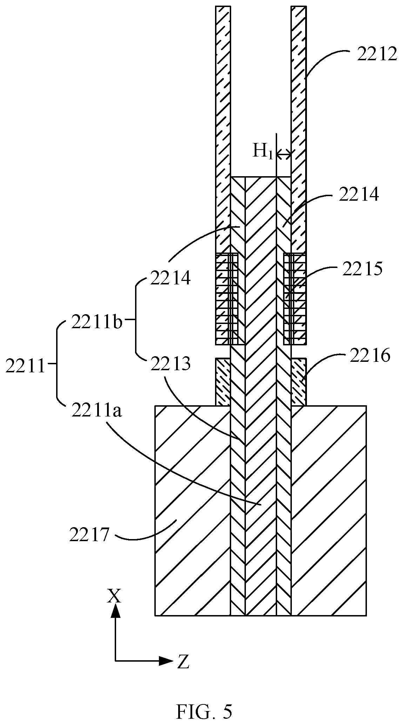

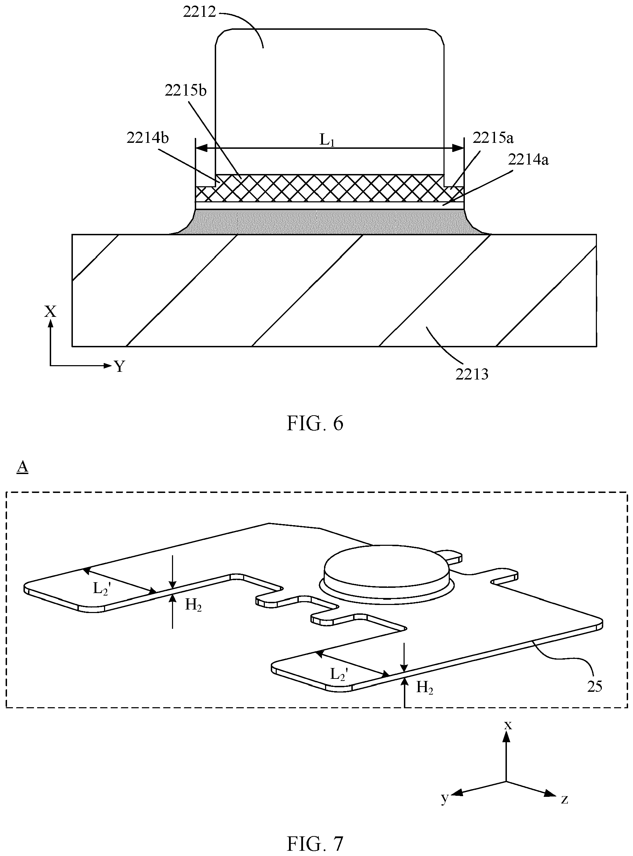

As shown in FIG. 5, the current collector 2211 includes an insulation layer 2211a and a conductive layer 2211b provided on an outer surface of the insulation layer 2211a. The conductive layer 2211b includes a body portion 2213 and a tab portion 2214 disposed along a first direction. The conductive structure 2212 is welded to the tab portion 2214, forming a welded zone 2215. The conductive structure 2212 extends away from the body portion 2213. In a second direction, the size $L_1$ of an end (such as $L_1$ shown in FIG. 6) of the welded zone 2215 near the body portion 2213 is greater than a preset threshold, where the preset threshold is inversely related to the thickness of the tab portion 2214 in a third direction. The first direction refers to an extending direction of the current collector 2211, for example, the first direction is direction x in FIG. 5. The second direction is perpendicular to the first direction and parallel to the tab portion 2214, for example, the second direction is direction y in FIG. 6. The third direction is perpendicular to both the first direction and the second direction, that is, perpendicular to the plane of the outer surface of the current collector, for example, the third direction is direction z in FIG. 5.

The current collector 2211 of the electrode plate 221 collects the current generated by the active substance layer to form a larger current output to the outside. Therefore, the current collector 2211 should be in sufficient contact with the active substance and have as low internal resistance as possible.

The body portion 2213 of the conductive layer 2211b refers to a portion of the conductive layer 2211b that is located on an outer surface provided with the active substance layer 2217 and away from the insulation layer 2211a. During a charging and discharging process of the battery 10, an electrochemical reaction of the active substance layer 2217 converts chemical energy into electrical energy.

The thickness of the conductive layer 2211b of the composite current collector is relatively small, resulting in insufficient current flow capacity of the tab. Typically, the conductive layer is widened to increase current flow capacity of the tab, but this also increases a space occupied, which may even affect the placement of other components inside the battery cell. When the tabs of multiple composite current collectors are connected to the connecting members, due to the presence of the insulation layer, the tabs cannot come in direct contact with each other, resulting in poor conductivity (or even insulation) between the tabs. Therefore, a conductive structure 2212 with sufficient current flow capacity is welded to the conductive layer 2211b, so that the current flows from the body portion 2213 through the tab portion 2214 to the welded zone 2215, and then to the conductive structure 2212. The conductive structure 2212 is electrically connected to the electrode terminal 241 via the connecting member 25.

The conductive structure 2212 has sufficient current flow capacity. After the conductive structure 2212 is welded to the tab portion 2214 to form the welded zone 2215, current flow capacity of a portion of the welded zone 2215 away from the body portion 2213 is mainly the current flow capacity of the conductive structure 2212. However, the end of the welded zone 2215 near the body portion 2213 is the starting end where the conductive structure 2212 is connected to the tab portion 2214. The current flow capacity at this location is also affected by the current flow capacity of the tab portion 2214. In addition, this location is the end portion of the welded zone 2215. If the current flow capacity is insufficient, a large amount of heat will be generated, and this end portion of the welded zone is prone to fuse, leading to repeated fusing and reconnection, which may cause sparks inside the battery.

In the embodiments of this application, the electrode plate 221 includes a current collector 2211 and a conductive structure 2212. The conductive structure 2212 is welded to the tab portion 2214 of the current collector 2211, forming a welded zone 2215. The size $L_1$ of the end of the welded zone 2215 near the body portion 2213 in the second direction is greater than a preset threshold, where the preset threshold is inversely related to the thickness of the tab portion 2214 in the third direction. This reduces the possibility of the end portion of the welded zone 2215 near the body portion 2213 being fused due to insufficient current flow capacity when a short circuit occurs in the battery 10, thereby reducing the possibility of sparks occurring in the end portion of the welded zone 2215 near the body portion 2213 and reducing the probability of safety issues in the battery 10.

Optionally, in the embodiments of this application, the preset threshold is $\frac{L_2 * H_2}{H_1 * C} * A$, where $H_2$ indicates thickness of an adapter piece at a minimum current flow width thereof 2212, $L_2$ indicates total width of connection surfaces between the conductive structure 2212 and the adapter piece at the minimum current flow width in the width direction of the adapter piece, $H_1$ indicates the thickness of the tab portion 2214 in the third direction, $C$ indicates the number of conductive structures 2212 connected to one adapter piece, and $A$ is a constant not less than 1.

Specifically, as shown in FIG. 5, $H_1$ can be the thickness of the tab portion 2214 in the third direction z. The adapter piece can be the foregoing connecting member 25 in FIG. 3. As shown in FIG. 7, $H_2$ can be thickness of the connecting member 25 at a minimum current flow width in the first direction x, and $L_2$ can be total width of the connecting member 25 at the minimum current flow width in the second direction y, which is sum of the widths of the minimum current flow width on both sides of the connecting member 25 in FIG. 7 in the second direction y, or $2L_2'$. It should be understood that during the assembly process of the battery cell 20, multiple conductive structures 2212 are stacked together and connected to one adapter piece, so the number $C$ of conductive structures 2212 connected to one adapter piece is introduced into the equation.

In the embodiments of this application, in order to reduce the possibility of the end portion of the welded zone 2215 near the body portion 2213 being fused due to insufficient current flow capacity when a short circuit occurs in the battery 10, it is necessary to ensure that the total current flow area of the end portion of the welded zone 2215 near the body portion 2213 is greater than the current flow area of the adapter piece connected to the conductive structure 2212, that is, $L_1 * H_1 * C > L_2 * H_2$.

Rearranging this inequality, $L_1 > \frac{L_2 * H_2}{H_1 * C}$ is obtained. Due to some processing errors in the manufacturing of the electrode plate 221, a constant not less than 1 is introduced into the inequality to provide some margin for the adjustment of the size $L_1$ of the end portion of the welded zone 2215, and $L_1 > \frac{L_2 * H_2}{H_1 * C} * A$ is obtained. In other words, the size $L_1$ of the end portion of the welded zone 2215 near the body portion 2213 in the second direction needs to be greater than the preset threshold $\frac{L_2 * H_2}{H_1 * C} * A$, so that the total current flow area of the end portion of the welded zone 2215 near the body portion 2213, formed on multiple conductive structures 2212, is greater than the current flow area of the corresponding adapter piece connected to the multiple conductive structures 2212. This ensures that the current flow capacity of the end portion of the welded zone 2215 near the body portion 2213, on the tab structure formed by stacking multiple conductive structures 2212, is greater than the current flow capacity of the corresponding adapter piece, reducing the possibility of the end portion of the welded zone 2215 near the body portion 2213 being fused due to insufficient current flow capacity when a short circuit occurs in the battery 10, thereby reducing the probability of safety issues in the battery 10.

Optionally, in the embodiments of this application, when the thickness $H_2$ at the minimum current flow width of the adapter piece is 0.8 mm, a total width $L_2$ of the connection surface between the adapter piece and the conductive structure 2212 at the minimum current flow width is 10 mm, current flow area of the adapter piece is 8 mm$^2$. If the thickness $H_1$ of the tab portion 2214 in the third direction is 1 $\mu$m and the number C of conductive structures 2212 connected to one adapter piece is 80, the size $L_1$ of the end portion of the welded zone 2215 near the body portion 2213 in the second direction needs to be greater than 100 mm, so that the current flow capacity of the tab structure in the end portion of the welded zone 2215 near the body portion 2213 is greater than the current flow capacity of the corresponding adapter piece.

For another example, when the thickness $H_2$ at the minimum current flow width of the adapter piece is 0.8 mm, a total width $L_2$ of the connection surface between the adapter piece and the conductive structure 2212 at the minimum current flow width is 20 mm, the current flow area of the adapter piece is 16 mm$^2$. If the thickness $H_1$ of the tab portion 2214 in the third direction is 1 $\mu$m and the number C of conductive structures 2212 connected to one adapter piece is 120, the size $L_1$ of the end portion of the welded zone 2215 near the body portion 2213 in the second direction needs to be greater than 134 mm, so that the current flow capacity of the tab structure in the end portion of the welded zone 2215 near the body portion 2213 is greater than the current flow capacity of the corresponding adapter piece.

It should be understood that the foregoing specific parameter settings are only examples for illustrative purposes in the embodiments and do not limit the scope of this application.

Optionally, in the embodiments of this application, $1 \le A \le 2$. To ensure that the current flow area of the welded zone 2215 is greater than the current flow area of the adapter piece electrically connected to it, the constant A should be not less than 1. In addition, based on the structural design of the end cover 24 of the battery cell 20, the size $L_1$ of the end portion of the welded zone 2215 should not be excessively large, so as to prevent lower plastics beneath the end cover 24 from compressing the conductive structure 2212. Therefore, the value of the constant A should not be excessively large, and the range of the constant A is 1 to 2.

Optionally, in the embodiments of this application, as shown in FIG. 5, a protective layer 2216 is provided on a portion of the outer surface of the tab portion 2214. In the first direction x, the protective layer 2216 is provided between the conductive structure 2212 and the active substance layer 2217, providing support to the tab portion 2214 and preventing deformation of the tab portion 2214 from affecting the current flow capacity of the electrode plate.

Optionally, in the embodiments of this application, the protective layer 2216 is made of an insulation material to prevent the protective layer 2216 from conducting and affecting the current flow path in the electrode plate 221, ensuring electrical connection safety of the electrode plate 221.

Optionally, the insulation material can include at least one of alumina trihydrate and hydroxide alumina.

Optionally, the protective layer 2216 can be formed on the outer surface of the tab portion 2214 via processes such as coating or plating.

Optionally, in the embodiments of this application, as shown in FIG. 6, the tab portion 2214 includes a first tab portion 2214a and a second tab portion 2214b. In the first direction x, the first tab portion 2214a is provided between the body portion 2213 and the second tab portion 2214b. In the second direction y, the size of the first tab portion 2214a is greater than the size of the second tab portion 2214b.

The size of the first tab portion 2214a is greater than the size of the second tab portion 2214b in the second direction y, that is, the first tab portion 2214a connected to the body portion 2213 has a relatively large size in the second direction y. This can increase the contact area between the body portion 2213 and the tab portion 2214, thereby increasing the connection strength, while the second tab portion 2214b has a relatively small size, which can reduce overall space occupied by the tab portion 2214.

Optionally, along the first direction x, the size of the tab portion 2214 in the second direction y can change continuously and smoothly. For example, the tab portion 2214 can have a triangular structure, trapezoidal structure, stepped structure, or the like. FIG. 6 illustrates an example where the tab portion 2214 is in a stepped structure.

Optionally, in the embodiments of this application, as shown in FIG. 6, the welded zone 2215 includes a first welded zone 2215a and a second welded zone 2215b connected to the first welded zone 2215a. The first welded zone 2215a is located at the first tab portion 2214a, and the second welded zone 2215b is located at the second tab portion 2214b. In the second direction y, the size of the first welded zone 2215a is greater than the size of the second welded zone 2215b.

The second welded zone 2215b is located at the second tab portion 2214b, which has a larger size in the second direction y, so that the size $L_1$ of the end portion of the welded zone 2215 near the body portion 2213 in the second direction y is greater than the preset threshold, where the welded zone 2215 is formed during the tab portion 2214 is welded to the conductive structure 2212. This reduces the possibility of the end portion of the welded zone 2215 near the body portion 2213 being fused due to insufficient current flow capacity when a short circuit occurs in the battery 10, thereby reducing the probability of safety issues in the battery 10. In addition, the welding area between the second welded zone 2215b and the second tab portion 2214b is relatively large, which can improve the connection strength between them.

The embodiments of this application further provide an electrode assembly 22, where the electrode assembly 22 can include the electrode plate 221 in the foregoing embodiments.

The embodiments of this application further provide a battery cell 20, where the battery cell 20 can include a housing and the electrode assembly 22 in the foregoing embodiments. The housing is used for accommodating the electrode assembly 22.

Optionally, in the embodiments of this application, the housing has an opening, and the battery cell 20 further includes an end cover, where the end cover is configured to close the opening.

The embodiments of this application further provide a battery 10, where the battery 10 can include the battery cell 20 in the foregoing embodiments. In the embodiments, the battery 10 may further include other structures such as a box, busbars, and the like, which are not further described here.

The embodiments of this application further provide an electric device, where the electric device can include the battery 10 in the foregoing embodiments. Optionally, the electric device can be a vehicle 1, a ship, or a spacecraft, but this is not limited in the embodiments of this application.

Although this application has been described with reference to the preferred embodiments, various modifications can be made to this application without departing from the scope of this application and the components therein can be replaced with equivalents. In particular, as long as there is no structural conflict, the various technical features mentioned in the embodiments can be combined in any manner. This application is not limited to the specific embodiments disclosed in this specification but includes all technical solutions falling within the scope of the claims.

**Claims**

1. An electrode plate, **characterized by** comprising:

    a current collector (2211), wherein the current collector (2211) comprises an insulation layer (2211a) and a conductive layer (2211b) disposed on an outer surface of the insulation layer (2211a), and the conductive layer (2211b) comprises a body portion (2213) and a tab portion (2214) arranged along a first direction (x); and a conductive structure (2212), wherein the conductive structure (2212) is welded to the tab portion (2214) to form a welded zone (2215), the conductive structure (2212) extends in a direction leaving the body portion (2213), and in a second direction (y), a size $L_1$ of an end of the welded zone (2215) near the body portion (2213) is greater than a preset threshold, wherein the preset threshold is inversely related to the thickness of the tab portion (2214) in a third direction (z), and the second direction (y) is perpendicular to the first direction (x) and parallel to the tab portion (2214), wherein the third direction (z) is perpendicular to the first direction (x) and the second direction (y).

2. The electrode plate according to claim 1, **characterized in that** the preset threshold is $\frac{L_2 * H_2}{H_1 * C} * A$; wherein $H_2$ indicates the thickness of an adapter piece at a minimum current flow width thereof, the adapter piece being connected to the conductive structure (2212), $L_2$ indicates the total width of the connection surfaces between the conductive structure (2212) and the adapter piece at the minimum current flow width in a width direction of the adapter piece, $H_1$ indicates the thickness of the tab portion (2214) in the third direction (z), C indicates the number of conductive structures (2212) connected to one adapter piece, and A is a constant not less than 1.

3. The electrode plate according to claim 2, **character-**

**ized in that** $1 \leq A \leq 2$.

4. The electrode plate according to any one of claims 1 to 3, **characterized in that** the tab portion (2214) comprises a first tab portion (2214a) and a second tab portion (2214b), wherein in the first direction (x), the first tab portion (2214a) is disposed between the body portion (2213) and the second tab portion (2214b), and in the second direction (y), a size of the first tab portion (2214a) is greater than a size of the second tab portion (2214b).

5. The electrode plate according to claim 4, **characterized in that** the welded zone (2215) comprises a first welded zone (2215a) and a second welded zone (2215b), wherein the first welded zone (2215a) is located at the first tab portion (2214a), the second welded zone (2215b) is located at the second tab portion (2214b), and in the second direction (y), a size of the first welded zone (2215a) is greater than a size of the second welded zone (2215b).

6. The electrode plate according to any one of claims 1 to 5, **characterized in that** a protective layer (2216) is provided on a portion of an outer surface of the tab portion (2214), wherein in the first direction (x), the protective layer (2216) is disposed between the conductive structure (2212) and an active substance layer (2217) on an outer surface of the body portion (2213).

7. The electrode plate according to claim 6, **characterized in that** the protective layer (2216) is made of an insulation material.

8. An electrode assembly, **characterized by** comprising the electrode plate according to any one of claims 1 to 7.

9. A battery cell, **characterized by** comprising:

   the electrode assembly according to claim 8; and
   a housing configured to accommodate the electrode assembly.

10. The battery cell according to claim 9, **characterized in that** the housing has an opening, wherein the battery cell further comprises an end cover, and the end cover is configured to close the opening.

11. A battery, **characterized by** comprising the battery cell according to claim 9 or 10.

12. An electric device, **characterized by** comprising the battery according to claim 11, wherein the battery is configured to supply electrical energy.

1

FIG. 1

10

FIG. 2

FIG. 3

FIG. 4

2212

$H_1$

2214

2214

2215

2211b

2213

2216

2211

2211a

2217

X

Z

FIG. 5

FIG. 6

FIG. 7

## INTERNATIONAL SEARCH REPORT

| International application No. |
| --- |
| **PCT/CN2023/083935** |

### A. CLASSIFICATION OF SUBJECT MATTER

H01M50/533(2021.01)i; H01M4/13(2010.01)i; H01M10/052(2010.01)i; H01M10/0525(2010.01)i; H01M10/054(2010.01)i

According to International Patent Classification (IPC) or to both national classification and IPC

### B. FIELDS SEARCHED

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 宁德时代, 江苏时代, 电极, 极片, 电池, 集流体, 极耳, 绝缘, 导电, 焊接, 尺寸, 距离, 厚度, 安全, electrode, pole piece, batter+, cell+, current collector, tab, insulat+, conduct+, weld+, dimension, distance, thickness, saf+

### C. DOCUMENTS CONSIDERED TO BE RELEVANT

| Category* | Citation of document, with indication, where appropriate, of the relevant passages | Relevant to claim No. |
| --- | --- | --- |
| PY | CN 115425372 A (CONTEMPORARY AMPEREX TECHNOLOGY LTD. JIANGSU et al.) 02 December 2022 (2022-12-02) description, paragraphs [0004]-[0075], and figures 1-9 | 1-12 |
| Y | CN 114566768 A (DONGGUAN POWERAMP TECHNOLOGY LTD.) 31 May 2022 (2022-05-31) description, paragraphs [0003]-[0060], and figures 1-9 | 1-12 |
| A | CN 113097662 A (ZHUHAI COSMX BATTERY CO., LTD.) 09 July 2021 (2021-07-09) entire document | 1-12 |
| A | CN 215989130 U (CONTEMPORARY AMPEREX TECHNOLOGY CO., LTD.) 08 March 2022 (2022-03-08) entire document | 1-12 |
| A | CN 217589350 U (ZHONGXINHANG TECHNOLOGY CO., LTD.) 14 October 2022 (2022-10-14) entire document | 1-12 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 May 2023** | **03 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/083935** |

| Patent document cited in search report | | | Publication date (day/month/year) | Patent family member(s) | | | Publication date (day/month/year) |
| --- | --- | --- | --- | --- | --- | --- | --- |
| CN | 115425372 | A | 02 December 2022 | CN | 115425372 | B | 14 April 2023 |
| CN | 114566768 | A | 31 May 2022 | None | | | |
| CN | 113097662 | A | 09 July 2021 | None | | | |
| CN | 215989130 | U | 08 March 2022 | None | | | |
| CN | 217589350 | U | 14 October 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211374725